(19) Europäisches Patentamt
European Patent Office
Office européen des brevets

(11) Numéro de publication : **0 284 473 B1**

# (12) FASCICULE DE BREVET EUROPEEN

(45) Date de publication du fascicule du brevet : **29.05.91 Bulletin 91/22**

(51) Int. Cl.$^5$ : **C07F 7/18**

(21) Numéro de dépôt : **88400513.3**

(22) Date de dépôt : **04.03.88**

## (54) Procédé de préparation de cétènes acétals silylés.

(30) Priorité : **13.03.87 FR 8703695**

(43) Date de publication de la demande : **28.09.88 Bulletin 88/39**

(45) Mention de la délivrance du brevet : **29.05.91 Bulletin 91/22**

(84) Etats contractants désignés : **AT BE CH DE ES FR GB GR IT LI LU NL SE**

(56) Documents cités :
**DE-A- 1 668 365**
**FR-A- 1 495 716**

(56) Documents cités :
**E. MÜLLER et al.: "Methoden der organischen Chemie", (Houben-Weyl), vol. XIII/5, Auflage 4, "Organo-Silicium-Verbindungen", 1980, pages 197-201, Georg Thieme Verlag, Stuttgart, DE**
**CHEMICAL COMMUNICATIONS, 1971, pages 136,137; Y.-N. KUO et al.: "Metal reductions of malonates and oxalates. A covenient decarboxylation route for disubstituted malonates and synthesis of keten acetals"**

(73) Titulaire : **RHONE-POULENC CHIMIE**
**25, quai Paul Doumer**
**F-92408 Courbevoie Cédex (FR)**

(72) Inventeur : **Ferlut, Jean-Serge**
**2, avenue du Parc**
**F-30340 Salindres (FR)**

(74) Mandataire : **Le Pennec, Magali et al**
**RHONE-POULENC INTERSERVICES Service Brevets Chimie 25, Quai Paul Doumer**
**F-92408 Courbevoie Cédex (FR)**

**EP 0 284 473 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne un procédé de préparation de cétènes acétals silylés. Elle concerne plus particulièrement un procédé de préparation desdits composés par condensation d'alkyls ou d'aryls halogénosilanes sur les α-halogénoesters.

Les cétènes acétals silylés sont utilisés par exemple selon le brevet US 4 417 034 comme catalyseur de polymérisation. Ils peuvent aussi être utilisés comme matière première dans la synthèse de lactames (brevet DE 3 007 298).

On entend par cétènes acétals silylés toute molécule de formule générale (I)

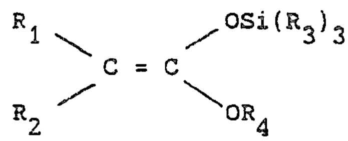

dans laquelle chacun des groupes $R_1$, $R_2$, $R_3$, $R_4$ représente un groupe identique ou différents choisis parmi les radicaux alkyles, alcoxyalkyles, aryles, aralkyles, alkylaryles, $R_4$ peut représenter également un groupe trialkylsilyloxyalkyl. Les groupes alkyles contiennent de préférence 1 à 6 atomes de carbone.

Ces composés sont obtenus dans l'art antérieur selon 2 méthodes principales. Il est connu par exemple selon l'article publié par YOSHII, TAKEDA publié en 1983 dans Chemical Pharmaceutical Bulletin 31, 4576-4588 de préparer les cétènes acétals silylés par hydrosilylation du méthacrylate de méthyle en présence de rhodium ou de platine comme catalyseur selon la réaction :

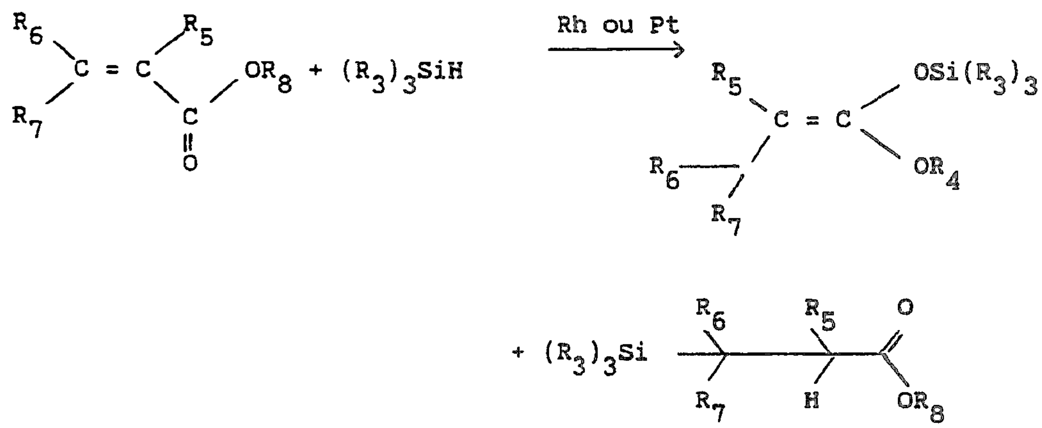


Cette méthode exige comme matière première le trialkylhydrogénosilane $(R_3)_3SiH$ qui est obtenu à partir de trialkylchorosilane par addition d'hydrure de lithium en excès, réaction qui n'est pas facile à mettre en oeuvre car l'hydrure de lithium est volatil et très inflammable. Lorsque le groupement $R_3$ représente le radical méthyle le triméthylsilane utilisé comme matière première présente un point d'ébullition de 9°C ce qui entraine de grosses difficultés de stockage et de manipulation.

Il est encore connu d'après l'article publie par NENG KUO, F.C. HEN, C. AINSWORTH, J. BLOOMFIELD dans le Journal of Chemical Society Chem Communication, 136-137 (1971) de préparer les cétènes acétals silylés par condensation d'un énolate d'ester avec un chlorosilane selon la réaction

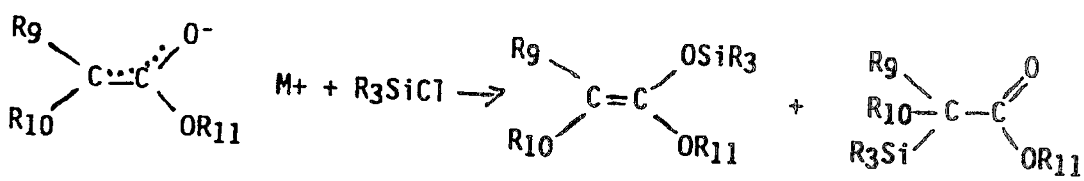


L'énolate est préparé selon cet article par action d'une base dure telle que le diisopropylamidure de lithium sur l'acétate substitué dans le tétrahydrofurane. On ajoute ensuite le chlorosilane.

La manipulation de dérivés lithiés dans le tétrahydrofurane à très basse température est très difficile à mettre en oeuvre au niveau industriel. Aussi l'industrie est toujours à la recherche d'un procédé industriel peu couteux et non dangereux de préparation des cétènes acétals silyles.

La présente invention a su atteindre cet objectif et a pour objet un procédé de préparation de cétène acétal silylé de formule générale (I)

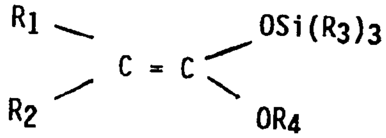
(I)

dans laquelle $R_1$, $R_2$, $R_3$, $R_4$ représentent des groupes identiques ou différents choisis parmi les radicaux alkyle, alcoxyalkyle, aryle, aralkyles, alkylaryle, $R_4$ pouvant en outre représenter un groupe triméthylsilyloxyalkyl caractérisé en ce qu'on met en présence un α-halogénoester de formule générale (II)

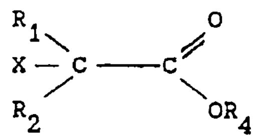
(II)

dans laquelle $R_1$, $R_2$, et $R_4$ ont la même signification que précédemment et X représente le chlore ou le brome avec un aryl ou alkylhalogénosilane en présence de sodium métallique.

Il est encore connu d'après J.P. PILARD, A. EKOLYA, J. DUNOGUES, N. DUFFAUT, et R. CALAS, dans le journal of Organometallic Chemistry 93 51-70 (1972) un procédé mettant en contact dans le tétrahydrofurane à une température comprise entre 0 et 10°C des α halogènoesters, du chlorométhylsilane en présence de lithium. Ce procédé ne permet d'obtenir que des trimethylsilyl 2 isobutyrate de méthyle.

La présente invention a permis contrairement à cet art antérieur de préparer les cétènes acétals silylés par mise en contact d'un α-haloesters et d'un aryl ou d'un alkylhalogenosilane en présence de sodium métallique selon la réaction suivante :

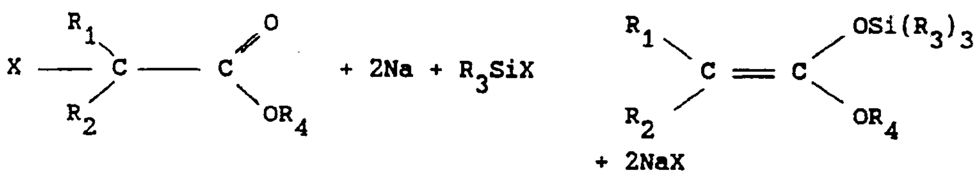

L'haloester de formule (II)

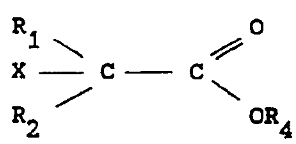
(II)

est obtenu par halogénation de l'acide correspondant. On utilise de préférence un α chloroester qui est obtenu notamment par chloration de l'acide correspondant en présence d'acide sulfurique à l'aide de chlore gazeux pendant quelques heures à une température comprise entre 20 à 150°C et de préférence entre 70 et 100°C. L'acide halogéné est ensuite estérifié "in situ" par un alcool de formule $R_4OH$ par toute méthode connue de l'homme de l'art.

Le cétène acétal silylé de formule (I)

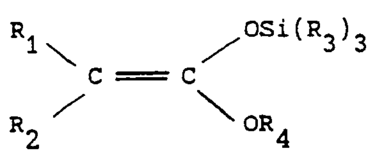
(I)

est obtenu par mise en présence de l'α haloester de formule (II) avec l'alkyl ou l'arylhalogénosilane soit sans solvant, l'halogènosilane servant de milieu réactionnel ou en présence d'un solvant choisi parmi les solvants aromatiques, les hydrocarbures aliphatiques, les solvants à base de silicium tel que l'hexaméthyldisiloxane.

Le sodium est introduit dans le milieu sous forme "sablée".

On entend par sodium "sablé" le fait d'introduire le sodium dans le solvant à une température supérieure au point de fusion du sodium, refroidir sous agitation, puis on introduit le mélange alkyl ou arylhalogenosilane et α haloesters.

On préfère utiliser des rapports molaires alkyl ou arylhalogénosilane à l'α haloester supérieur ou égal à 1,5.

Il est bien entendu que l'on n'aura pas de limite supérieure puisque l'alkyl ou l'arylhalogénosilane peut servir de solvant dans le milieu réactionnel. Les quantités maximales seront simplement adaptées par l'homme de l'art à l'économie du procédé.

Du point de vue quantité de sodium introduite il est préférable d'en mettre un excès par rapport à la stoechiométrie d'environ 10%.

On réalise la condensation de préférence à une température comprise entre 30 et 100°C et encore plus préférentiellement à une température d'environ 80°C.

Parmi les α haloesters de formule (II) on peut citer : les méthyl-2 chloro-2 ou bromo-2 propionates de méthyle, d'éthyle, de propyle, d'isopropyle, de butyle, de terbutyle, de phényle, de triméthylsilyloxypropyle ; les éthyl-2, propyl-2, butyl-2, phényl-2, chloro ou bromo-2 propionates d'alkyle ; les alkyl-2 chloro ou bromo-2 butyrates de méthyle, d'éthyle, de propyle, d'isopropyle, de butyle, de terbutyle, de phényle, de triméthylsilyloxypropyle.

Parmi les alkyl ou arylhalogénosilanes on préfère utiliser les bromo et chlorosilanes et notamment le triméthylchlorosilane, le diphénylméthylchlorosilane, le diméthylphénylchlorosilane, le triéthylchlorosilane, le N butyldiméthylchlorosilane, le triméthylbromosilane, le diphenylméthyl bromosilane, le diméthylphénylbromosilane, le N-butyldiméthylbromosilane.

Parmi les cétènes acétals silylés objet de la présente invention et répondant à la formule (I) on peut citer: le triméthylsilyloxy-1 méthoxy-1 méthyl-2 propène ; les diméthylphényl, diphénylméthyl, N-butyldiméthyl, triéthylsilyloxy-1 méthoxy-1 diméthylpropènes ; les trialkyl ou arylsilyloxy-1, éthoxy-1, propoxy-1, butoxy-1, phénoxy-1, triméthylsilyloxy propoxy-1, méthyl-2 propènes ; les trialkyl ou arylsilyloxy-1 alkoxy-1 éthyl-2, propyl-2, butyl-2, phényl-2 propènes ; les trialkyl ou arylsilyloxy-1 alkoxy-1 alkyl-2 butènes.

Les composés objet de la présente invention sont notamment isolés par filtration, le précipité est lavé avec le solvant de réaction. Le filtrat contenant le cétène acétal silylé est distillé sous pression réduite afin d'obtenir un produit possédant une pureté d'au moins 90%.

L'invention sera plus complétement décrite à l'aide des exemples suivants quine doivent pas être considérés comme limitatifs de l'invention.

EXEMPLES 1 A 8

La synthèse du chloro isobutyrate de méthyle, non disponible dans le commerce, est facilement réalisée en deux étapes par chloration de l'acide isobutyrique, par le chlore en présence de 10% molaire d'acide chlorosulfonique, puis estérification par le méthanol dans le même réacteur.

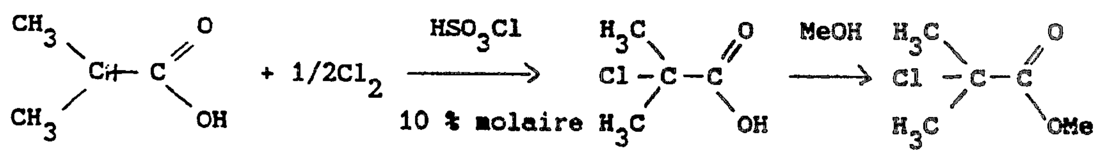


La durée de chloration est de 11 h à 80-90°C, celle de l'estérification est de 8 h à reflux soit 90°C.

Le rendement en chloroisobutyrate de méthyle pur distillé est de 60% par rapport à l'acide isobutyrique de départ.

Dans un réacteur normalisé muni d'une turbine disposant d'un réfrigérant et d'un système d'introduction précis (ensemble pousse-seringue), on charge 30 grammes d'hexaméthyldisiloxane, 0,21 at.g de sodium (4,85 g). Sous une forte agitation (1500 T/mn) à reflux du solvant 98°C, on "sable" le sodium pendant 30 mn, on refroidit à 60°C.

A l'aide d'une ampoule de coulée en 5 mn, on introduit 0,2 mole de triméthyl chlorosilane à 99%, soit 22 grammes. Puis avec le pousse-seringue en 1 heure 0,1 mole de α chloro isobutyrate de méthyle à 96% soit 14,2 grammes. La température pendant cette introduction est comprise entre 65 et 82°C. Le brut réactionnel

est maintenu pendant 3 heures à 60-65°C sous agitation.

Après refroidissement sous atmosphère inerte d'azote, on filtre sur verre fritté n° 3 afin d'éliminer le chlorure de sodium formé. On lave le gâteau par 2 fois 10 grammes d'hexaméthyldisiloxane. On vérifie par analyse chromatographie phase gazeuse qu'il n'y a plus de chlorosilane et de cétène acétal silylé dans le précipité.

Le précipité est traité par du méthanol afin de détruire le sodium n'ayant pas réagi puis par de l'eau. Le filtrat est distille sous pression réduite sous 50 mm Hg, puis sous 10 mm Hg (afin d'éviter une dégradation du cétène acétal silylé) à l'aide d'une colonne remplie d'anneaux de Raschig de 15 cm. Le produit ainsi obtenu à une pureté de 90% pour un rendement de 62%.

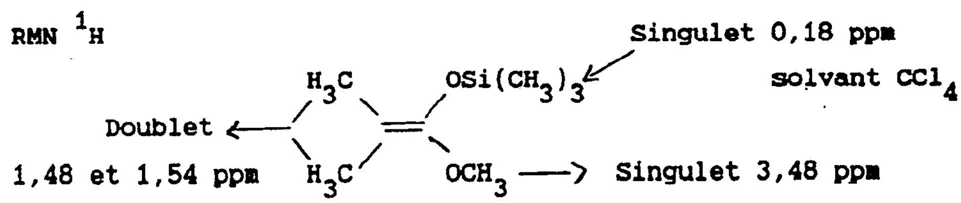


Conformément à l'essai précédent on réalise les essais 2 à 9 dans les conditions suivantes :

| ESSAIS | SOLVANT 15 g | Na at.g-1 | Me3-SiCl M | Chloro isobutyrate de méthyle M | TT % | RR % en triméthylsilyloxy-1 méthoxy-1 diméthyl-2,2 propène |
|---|---|---|---|---|---|---|
| 2 | Me3SiOSiMe3 | 0,15 | 0,15 | 0,05 | 99 | 50 |
| 3 | Me3SiOSiMe3 | 0,20 | 0,20 | 0,10 | 90 | 70<br>distillé 61 |
| 4 | toluène | 0,15 | 0,10 | 0,05 | 98 | 55 |
| 5 | toluène | 0,11 | 0,10 | 0,05 | 99 | 60 |
| 6 | Me3SiCl | 0,11 | - | 0,05 | 97 | 71 |

| ESSAIS | SOLVANT 15 g | Na at.g-1 | Me3-SiCl M | Chloro butyrate | TT % | RR % en |
|---|---|---|---|---|---|---|
| 7 | Me3SiOSiMe3 | 0,20 | 0,20 | chloro isobutyrate de phényle M 0,10 | 95 | triméthylsilyloxy-1 phénoxy-1 diméthyl-2,2 propène 70 |
| 8 | Me3SiOSiMe3 | 0,20 | 0,20 | chloro isobutyrate d'éthyle M 0,10 | 97 | triméthylsilyloxy-1 éthoxy-1 diméthyl-2,2 propène 65 |
| 9 | Me3SiOSiMe3 | 0,20 | 0,20 | méthyl-2 chloro-2 butyrate de méthyle 0,10 | 90 | triméthylsilyloxy-1 méthoxy-1 méthyl-2 butène-1 60 |

## Revendications

1. Procédé de préparation de cétènes acétals silylés de formule générale (I) :

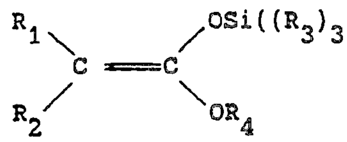

(I)

dans laquelle $R_1$, $R_2$, $R_3$, $R_4$ représentent des groupes identiques ou différents choisis parmi les radicaux alkyle, alcoxyalkyle, aryle, aralkyles, alkylaryle, $R_4$ pouvant en outre représenter un groupe triméthylsilyloxyalkyl, caractérisé en ce qu'on met en présence un α-halogénoester de formule générale (II)

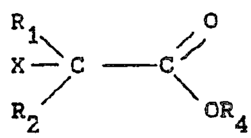

(II)

dans laquelle $R_1$, $R_2$, et $R_4$ ont la même signification que précédemment et X représente le chlore ou le brome avec un aryl ou alkylhalogénosilane en présence de sodium métallique.

2. Procédé selon la revendication 1, caractérisé en ce que dans la formule (I) et (II) les groupes $R_1$, $R_2$, $R_3$ et $R_4$ représentent des radicaux alkyle, alcoxyalkyle dont les chaînes alkyles contiennent 1 à 6 atomes de carbone.

3. Procédé selon la revendication 1 caractérisé en ce que l'α-halogenoester est un chloro ou bromoester.

4. Procédé selon la revendication 1 caractérisé en ce qu'on opère à une température comprise entre 30 et 100°C et de préférence à une température d'environ 80°C.

## Ansprüche

1. Verfahren zur Herstellung von silylierten Ketenacetalen der allgemeinen Formel (I),

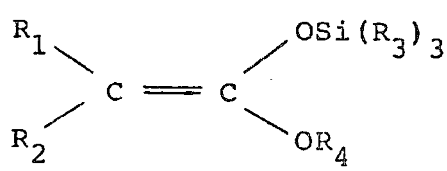

(I)

worin $R_1$, $R_2$, $R_3$ und $R_4$ gleiche oder verschiedene Gruppen bedeuten, die aus den Alkyl-, Alkoxyalkyl-, Aryl-, Aralkyl- und Alkylarylgruppen ausgewählt sind, und $R_4$ außerdem eine Trimethylsilyloxyalhylgruppe bedeuten kann, dadurch gekennzeichnet, daß man einen α-Halogenester der allgemeinen Formel (II),

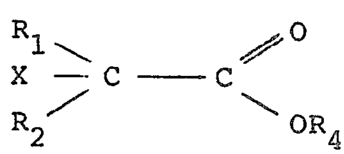

(II)

worin $R_1$, $R_2$ und $R_4$ dieselbe Bedeutung wie zuvor haben und X Chlor oder Brom bedeutet mit einem Aryl- oder Alkylhalogensilan in Gegenwart von metallischem Natrium zusammenbringt.

2. Verfahren nach Anspruch 1, dadurch gekennzeichnet, daß die Gruppen $R_1$, $R_2$, $R_3$ und $R_4$ in Formel (I)

und (II) Alkyl- und Alkoxyalkylreste bedeuten, deren Alkylketten 1 bis 6 Kohlenstoffatome enthalten.

3. Verfahren nach Anspruch 1, dadurch gekennzeichnet, daß der α-Halogenester ein Chlor- oder Bromester ist.

4. Verfahren nach Anspruch 1, dadurch gekennzeichnet, daß man bei einer Temperatur zwischen 30°C und 100°C und vorzugsweise bei etwa 80°C arbeitet.

**Claims**

1. Process for the preparation of silylated ketene acetals of the general formula (I) :

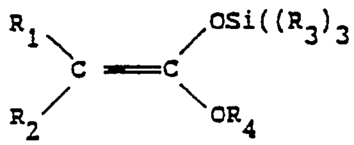

(I)

in which $R_1$, $R_2$, $R_3$ and $R_4$ represent identical or different groups chosen from among alkyl, alkoxyalkyl, aryl, aralkyl and alkylalryl radicals, and $R_4$ can furthermore represent a trimethylsilyloxyalkyl group, characterised in that an α-halogenoester of the general formula (II)

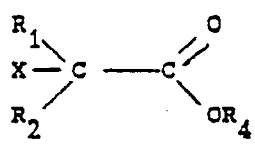

(II)

in which $R_1$, $R_2$ and $R_4$ have the same meaning as above and X represents chlorine or bromine is brought together with an aryl or alkylhalogenosilane in the presence of metallic sodium.

2. Process according to claim 1, characterised in that in the formula (I) and (II), the groups $R_1$, $R_2$, $R_3$ and $R_4$ represent alkyl or alkoxyalkyl radicals whereof the alkyl chains contain 1 to 6 carbon atoms.

3. Process according to claim 1, characterised in that the α-halogenoester is a chloroester or bromoester.

4. Process according to claim 1, characterised in that it is carried out at a temperature of between 30 and 100°C and preferably at a temperature of about 80°C.